# EUROPÄISCHE PATENTSCHRIFT

(11) **EP 2 870 368 B1**
(45) Veröffentlichungstag und Bekanntmachung des Hinweises auf die Patenterteilung: **25.04.2018**
(21) Anmeldenummer: 13732454.7
(22) Anmeldetag: 26.06.2013
(51) Int. Cl.: F16B 5/02, F16B 37/12

(54) **TOLERANZAUSGLEICHSELEMENT**
TOLERANCE-EQUALIZING ELEMENT
ÉLÉMENT DE COMPENSATION DE TOLÉRANCES

(30) Priorität: 03.07.2012 DE 202012102440 U
(43) Veröffentlichungstag der Anmeldung: 13.05.2015
(73) Patentinhaber: Schwarzbich, Jörg, 33615 Bielefeld (DE)
(72) Erfinder: Schwarzbich, Jörg, 33615 Bielefeld (DE)
(74) Vertreter: Ter Meer Steinmeister & Partner
(86) Internationale Anmeldenummer: PCT/EP2013/063386
(87) Internationale Veröffentlichungsnummer: WO 2014/005899

(56) Entgegenhaltungen:
- WO-A1-2005/047712
- DE-U1- 29 807 967
- DE-U1-202006 012 493
- DE-U1-202006 012 713
- US-A- 2 934 123
- US-A- 4 040 462
- US-A- 5 101 213
- US-A- 5 639 195
- US-A1- 2002 066 246

## Beschreibung

Die Erfindung betrifft ein Toleranzausgleichselement mit mindestens zwei Stützkörpern, die derart miteinander in Gewindeeingriff stehen, dass das Axialmaß des Toleranzausgleichselements durch relative Verdrehung der Stützkörper verstellbar ist.

Beispiele für Toleranzausgleichselemente dieser Art werden in DE 98 07 967 U1, EP 1 118 605 A1 und EP 1 215 401 A2 beschrieben.

DE 20 2006 012 493 U1 zeigt ein Toleranzausgleichselement nach dem Oberbergriff des Anspruchs 1.

Diese Toleranzausgleichselemente dienen insbesondere zum verspannenden Verbinden von zwei Bauteilen mittels einer Verbindungsschraube, die durch die ringförmig ausgebildeten Stützkörper hindurchgesteckt wird. Einer der Stützkörper steht über eine Rutschkupplung mit der Verbindungsschraube in Eingriff, so dass er, wenn die Verbindungsschraube in eines der beiden zu verbindenden Bauteile eingeschraubt wird, reibschlüssig mitgenommen und damit relativ zu dem anderen Stützkörper verdreht wird. Auf diese Weise vergrößert sich während des Einschraubvorgangs das Axialmaß des Toleranzausgleichselements, bis es den Zwischenraum zwischen den beiden Bauteilen überbrückt. Die Rutschkupplung erlaubt es dann, dass die Verbindungsschraube weiter eingeschraubt wird, während die beiden Stützkörper ihre Position relativ zueinander behalten.

Bei den bekannten Toleranzausgleichselementen werden die Stützkörper durch zylindrische Metallteile gebildet, die über eingeschnittene Gewinde, beispielsweise Linksgewinde, miteinander in Eingriff stehen.

In DE 20 2011 052 036 U1 wird ein Toleranzausgleichselement beschrieben, bei dem ein Stützkörper durch eine Schraubenfeder gebildet wird, die aus einem Draht gewickelt ist. Der Draht hat einen rechteckigen Querschnitt und ist so gewickelt dass die nach innen und nach außen weisenden Seiten des Rechtecks parallel zur Achse der Schraubenfeder orientiert sind.

US 5 101 213 A beschreibt eine Kupplung mit zwei ineinandergreifenden Gewindeteilen, die jeweils durch eine Schraubenfeder gebildet werden.

Aufgabe der Erfindung ist es, ein Toleranzausgleichselement zu schaffen, das sich einfacher und kostengünstiger herstellen lässt.

Diese Aufgabe wird erfindungsgemäß mit den in den unabhängigen Ansprüchen angegebenen Merkmalen gelöst.

In einer Ausführungsform weisen die Stützkörper jeweils eine Schraubenfeder auf, die aus einem Draht mit nicht rechteckigem Querschnitt gewickelt ist und das Gewinde dieses Stützkörpers bildet. In einer anderen Ausführungsform ist der Querschnitt des Drahtes rechteckig, aber der Draht ist so gewickelt, dass seine Seiten schräg in Bezug auf die Achse der Schraubenfeder verlaufen.

Die Stützkörper oder zumindest deren Gewindeteile können somit in beiden Ausführungsformen einfach durch Aufwickeln eines geeignet profilierten Drahtes gebildet werden, wobei die Gewindegänge des Gewindes durch das Profil des Drahtes gebildet werden. Auf diese Weise entfallen aufwändige Arbeitsvorgänge zur spanabhebenden Bearbeitung des Metalls wie beispielsweise Drehen und Gewindeschneiden.

Vorteilhafte Ausgestaltungen der Erfindung sind in den Unteransprüchen angegeben.

Wahlweise können die Windungen der Schraubenfeder an ihren Berührungsflächen miteinander verbunden werden, beispielsweise verklebt, verlötet oder verschweißt, beispielsweise durch Widerstandsschweißen, so dass man einen starren Metallkörper erhält.

Da für die Gewindeteile praktisch keine spanende Bearbeitung erforderlich ist, können für die Schraubenfedern hochfeste Federstahldrähte verwendet werden. Das hat den Vorteil, dass schon bei geringer Überlappung der miteinander in Gewindeeingriff stehenden Stützkörper eine hohe Haltekraft erreicht wird. Folglich kann auch bei kleinem Mindestaxialmaß des Toleranzausgleichselements ein großer Verstellbereich erreicht werden, so dass sich entsprechend große Abstandstoleranzen überbrücken lassen.

In einer besonders vorteilhaften Ausführungsform entspricht die Querschnittsform des Drahtes einem auf die Spitze gestellten Quadrat, so dass sich die auf Block aneinanderliegenden Windungen der Schraubenfeder im wesentlichen nur mit den Spitzen der Quadrate berühren. Durch die in Bezug auf die Schraubenfeder nach innen und nach außen weisenden Spitzen wird dann wohl ein Innengewinde als auch ein Außengewinde gebildet.

Gemäß einer vorteilhaften Weiterbildung der Erfindung ist an mindestens einem Ende der Schraubenfeder eine Endplatte angeordnet, die eine ringförmige, zu der letzten Windung der Schraubenfeder komplementäre Nut aufweist. Wenn die letzte Windung der Schraubenfeder in der Nut aufgenommen wird, lässt sich folglich deren Gewindesteigung ausgleichen, so dass die Endplatte satt am Ende der Schraubenfeder anliegt und ihrerseits eine Außenfläche aufweist, die rechtwinklig zur Achse der Schraubenfeder orientiert ist und damit eine geeignete Stützfläche zur Abstützung eines der zu verbindenden Bauteile bildet. Auf diese Weise erübrigt sich ein aufwendiges Planschleifen in der Schraubenfeder. Die Nut in der Endplatte kann beispielsweise durch Prägen hergestellt werden. Insgesamt erhält man so zu geringen Kosten einen stabilen Stützkörper mit exakt rechtwinklig zur Achse verlaufenden Stirnflächen.

Wenn beide Stützkörper durch Schraubenfedern gebildet werden, können die Endplatten zwei konzentrische Nuten aufweisen, je eine für das Ende jeder der beiden Schraubenfedern. Die Enden der Nuten, an denen ihre Tiefe am größten ist, bilden dann zugleich einen Anschlag für das Ende des Drahtes und tragen so dazu bei, eine Verdrehung der Schraubenfedern und der Endplatte relativ zueinander zu verhindern.

Im folgenden werden Ausführungsbeispiele anhand der Zeichnung näher erläutert.

Es zeigen:
- Fig. 1: einen axialen Schnitt durch eine Verbindungsvorrichtung mit einem erfindungsgemäßen Toleranzausgleichselement in einem Zustand vor Herstellung der Verbindung;
- Fig. 2: die Verbindungsvorrichtung nach Fig. 1 im Zustand nach Herstellung der Verbindung;
- Fig. 3 bis 7: Beispiele für Schraubenfedern, die aus Drähten mit unterschiedlichen Querschnittsformen gewickelt sind;
- Fig. 8: einen axialen Schnitt durch ein Toleranzausgleichselement gemäß einem anderen Ausführungsbeispiel; und
- Fig. 9 und 10: Schnitte durch das Toleranzausgleichselement nach Fig. 8 in zwei unterschiedlichen Einstellpositionen und in einer gegenüber Fig. 8 um 90° gedrehten Schnittebene.

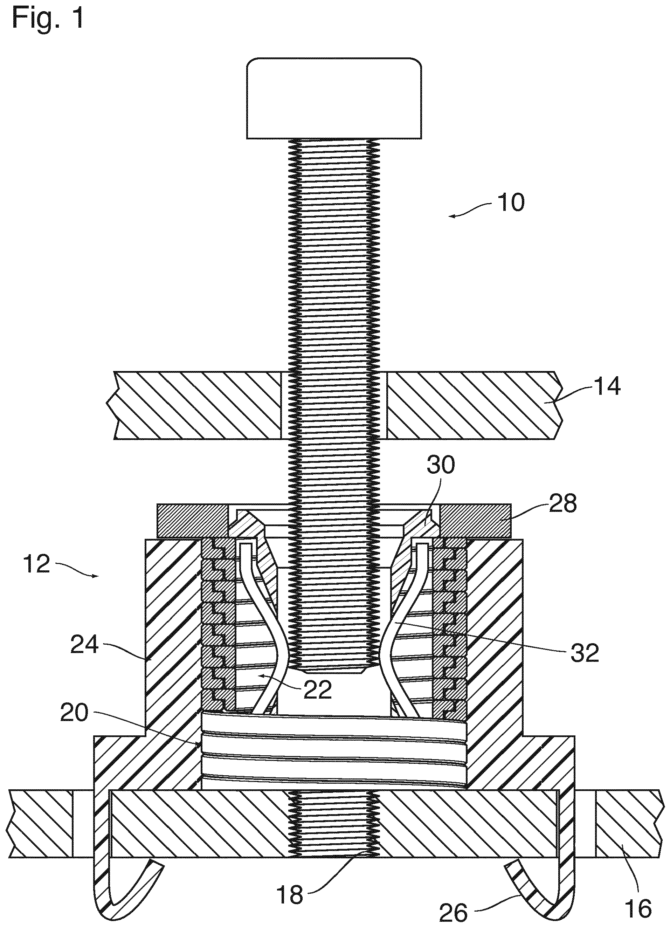

In Fig. 1 ist eine Verbindungsvorrichtung gezeigt, die eine Verbindungsschraube 10 und ein Toleranzausgleichselement 12 umfasst und dazu dient, ein erstes Bauteil 14 auf Abstand mit einem zweiten Bauteil 16 zu verbinden.

Die Verbindungsschraube 10 ist durch eine Bohrung des ersten Bauteils 14 gesteckt und wird in eine Gewindebohrung 18 des zweiten Bauteils 16 eingeschraubt. Das Toleranzausgleichselement 12 dient als Abstandshalter zwischen den Bauteilen 14, 16. Es weist einen als Schraubenfeder ausgebildeten äußeren Stützkörper 20, der sich an dem zweiten Bauteil 16 abstützt, und einen inneren Stützkörper 22 auf, der ebenfalls als Schraubenfeder ausgebildet ist und sich (im Endzustand) an dem ersten Bauteil 14 abstützt.
Der äußere Stützkörper 20 ist im gezeigten Beispiel eine linkshändig gewickelte Feder aus einem Draht, der einen nicht rechteckigen, im gezeigten Beispiel L-förmigen Querschnitt mit abgerundeten oder abgefasten Kanten aufweist. Wenn die Schraubenfeder nicht auf Zug beansprucht ist, liegen die Windungen auf Block aneinander. Die nach innen vorspringenden Schenkel der L-förmigen Drahtquerschnitte bilden zusammen ein Innengewinde.

Der innere Stützkörper 22 ist linkshändig und auf Block aus einem Draht gewickelt, der ebenfalls einen L-förmigen Querschnitt hat. Die Querschnitte der Drähte der Stützkörper 20 und 22 sind zueinander komplementär und ergänzen sich zu einem Rechteck. So bilden die Windungen des inneren Stützkörpers 22 ein Außengewinde, das mit dem Innengewinde des Stützkörpers 20 in Eingriff steht.

Im gezeigten Beispiel ist der Stützkörper 20 in eine Fassung 24 aus Kunststoff eingespritzt oder eingepresst oder eingeklebt, die auch das innere des unteren Teils der Schraubenfeder ausfüllen kann und federnde Klauen 26 aufweist, mit denen die Fassung 24 und damit auch der Stützkörper 20 drehfest an dem zweiten Bauteil 16 gehalten werden können.

Der innere Stützkörper 22 ist am oberen Ende mit einem Metallring 28 verbunden, beispielsweise verschweißt. Im Inneren des Metallrings 28 und des Stützkörpers 22 ist eine Hülse 30 aus Kunststoff aufgenommen, die am oberen und am unteren Ende mit den oberen und unteren Enden des Stützkörpers 22 verclipst ist und so dessen Windungen zusammenhält.

Die Windungen des äußeren Stützkörpers 20 werden im gezeigten Beispiel durch die Fassung 24 zusammengehalten.

Wahlweise können die Windungen der Stützkörper auch miteinander verschweißt sein, so dass ein noch festerer Zusammenhalt erreicht wird. Besonders geeignet ist hierzu ein Widerstands-Schweißverfahren, bei dem ein Stromimpuls von einem Ende der Schraubenfeder zum anderen durch den die Schraubenfeder bildenden Draht geleitet wird. Der elektrische Widerstand ist dann an den Berührungsflächen, an denen die einzelnen Windungen des Drahtes aneinander anliegen, am größten, so dass das Metall des Drahtes gezielt an diesen Berührungsflächen erhitzt wird und dadurch die einzelnen Windungen miteinander verschweißt werden.

Die Hülse 30 im inneren Stützkörper 22 dient in diesem Beispiel zugleich zur Fixierung von zwei Federbügeln 32, die einander diametral gegenüberliegen und mit ihren oberen und unteren Enden in je einer Tasche der Hülse 30 aufgenommen sind, während ihr nach innen gewölbter Mittelteil durch ein Fenster der Hülse 30 nach innen ragt. Wahlweise können die Federbügel 32 auch in einem Stück mit der Hülse 30 ausgebildet sein.

In dem in Fig. 1 gezeigten Zustand ist der innere Stützkörper 22 vollständig in den äußeren Stützkörper 20 eingeschraubt, so dass der Metallring 28 nahezu auf dem oberen Ende der Fassung 24 und auf der obersten Windung des äußeren Stützkörpers 20 aufliegt, während zwischen dem Bauteil 14 und dem Metallring 28 noch ein gewisser Spalt besteht.

Um die Bauteile 14 und 16 so miteinander zu verbinden, dass sie den in Fig. 1 gezeigten Abstand zueinander behalten, wird die Verbindungsschraube 10 durch eine Bohrung des Bauteils 14 gesteckt und in den inneren Stützkörper 22 eingeführt. Durch den Gewindeschaft der Verbindungsschraube werden dabei die Federbügel 32 nach außen gedrückt und elastisch verformt, da sie sich mit ihren oberen und unteren Enden an der Innenfläche des Stützkörpers 22 abstützen. Der weiteren Einsteckbewegung der Verbindungsschraube 10 wird so ein gewisser Widerstand entgegengesetzt, der sich jedoch überwinden lässt, so dass die Verbindungsschraube 10 weiter durchgeschoben werden kann, bis sie die Gewindebohrung 18 des Bauteils 16 erreicht.

Anschließend wird die Verbindungsschraube 10 in die Gewindebohrung 18 eingeschraubt. Da die Federbügel 32 gegen den Umfang des Gewindeschaftes gespannt sind, kommt zu einem verhältnismäßig hohen Reibschluss zwischen dem Außengewinde der Verbindungsschraube 10 und den Federbügeln 32, so dass die Federbügel in Drehrichtung mitgenommen werden. Da die Federbügel 32 in Umfangsrichtung der Hülse 30 in den jeweiligen Taschen fixiert sind, wird auch die Hülse 30 in Drehrichtung mitgenommen. Da die Hülse 30 mit dem Stützkörper 22 verclipst ist, drehen sich auch der innere Stützkörper 22 und der Metallring 28 mit, und zwar in Einschraubrichtung der Verbindungsschraube 10 gesehen rechtsdrehend, da die Verbindungsschraube 10 ein Rechtsgewinde hat.

Der äußere Stützkörper 20 wird dagegen durch die Fassung 24 und die in das Bauteil 16 eingreifenden Klauen 26 an einer Drehung gehindert. Folglich dreht sich der innere Stützkörper 22 relativ zu dem äußeren Stützkörper 20, und aufgrund des Linksgewindes, über das diese Stützkörper miteinander in Eingriff stehen, wird der innere Stützkörper 22 nach oben, entgegen der Einschraubrichtung der Verbindungsschraube 10 aus dem äußeren Stützkörper 20 herausgeschraubt, so dass sich der Metallring 28 dem Bauteil 14 annähert.

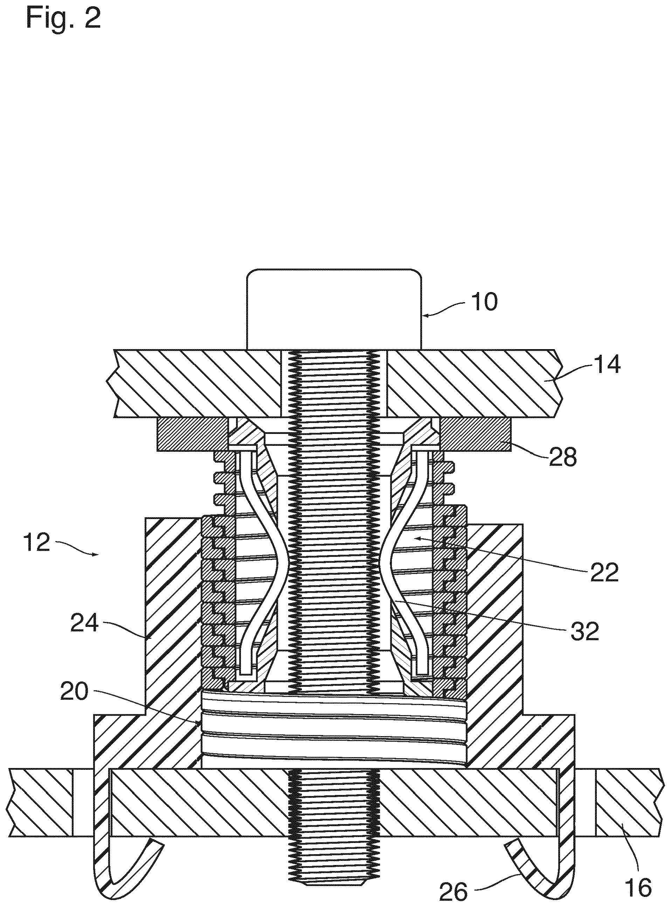

Wenn der Metallring 28 an dem Bauteil 14 anschlägt, wird der weiteren Ausschraubbewegung des Stützkörpers 22 ein größerer Widerstand entgegengesetzt, so dass die durch den Gewindeschaft der Verbindungsschraube 10 und die Federbügel 32 gebildete Rutschkupplung durchrutscht. Der innere Stützkörper 22 und der Metallring 28 bleiben dann stationär, während die Verbindungsschraube 10 weiter in das Bauteil 16 eingeschraubt wird. Schließlich wird so der in Fig. 2 gezeigte Zustand erreicht, in dem der Kopf der Verbindungsschraube 10 an dem Bauteil 14 anliegt, so dass die Bauteile 14, 16 von entgegengesetzten Seiten her gegen das Toleranzausgleichselement 12 gespannt werden, das die Einhaltung des gewünschten Abstands zwischen diesen Bauteilen sicherstellt.

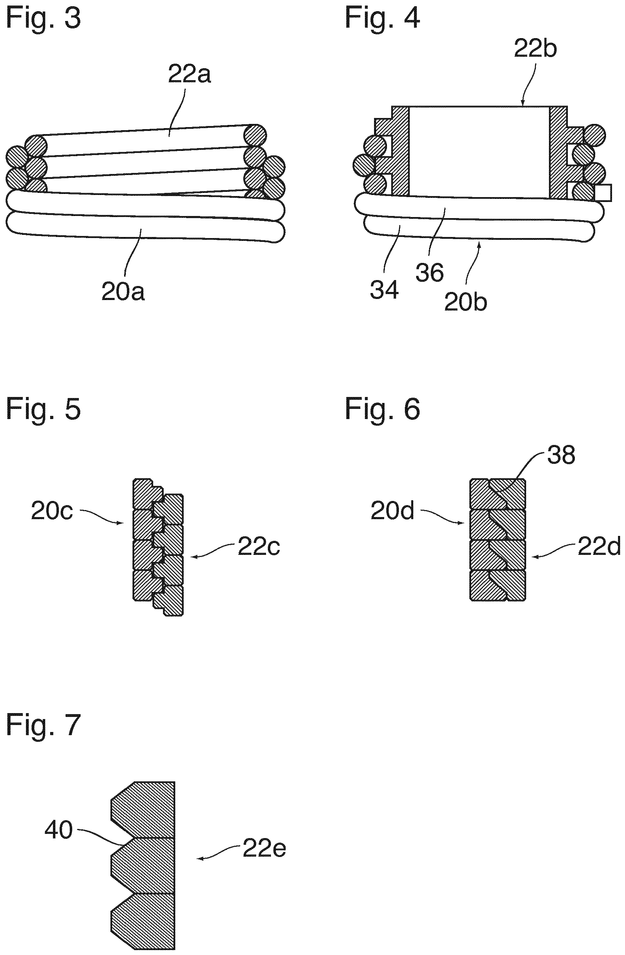

Fig. 3 bis 7 zeigen Beispiele für andere mögliche Gestaltungen der inneren und äußeren Stützkörper. In Fig. 3 wird ein äußerer Stützkörper 20a durch eine auf Block gewickelte Schraubenfeder aus Runddraht gebildet. Entsprechend wird auch ein innerer Stützkörper 22a durch eine auf Block gewickelte Schraubenfeder aus Runddraht gebildet. Aufgrund des runden Querschnitts des Drahtes werden auf der Innenseite des äußeren Stützkörpers 20a zwischen den einzelnen Windungen schraubenförmig umlaufende Vertiefungen gebildet, in die die äußeren Scheitel der Windungen des inneren Stützkörpers 22a eingreifen können, so dass auch hier ein Gewindeeingriff zwischen den beiden Stützkörpern erreicht wird.

Fig. 4 zeigt ein Beispiel, bei dem ein äußerer Stützkörper 20b durch zwei ineinandergeschachtelte Schraubenfedern 34 und 36 gebildet wird, deren Windungen einander abwechseln und aneinander anliegen. Die Schraubenfeder 34 hat einen etwas kleineren Durchmesser als die Schraubenfeder 36 und bildet so ein Innengewinde, dessen Gewindenuten breiter und tiefer sind als in Fig. 3. In dieses Innengewinde kann dann ein entsprechendes Außengewinde eines inneren Stützkörpers 22b eingreifen. Im gezeigten Beispiel ist der innere Stützkörper ein Drehteil aus Metall mit einem gerollten oder geschnittenen Außengewinde.

Fig. 5 zeigt ein Ausführungsbeispiel, bei dem wieder beide Stützkörper 20c und 22c aus Draht gewickelt sind. Gezeigt ist hier nur ein Ausschnitt aus der Umfangswand der miteinander in Gewindeeingriff stehenden Stützkörper. Der Draht beider Stützkörper hat in diesem Beispiel einen T-förmigen Querschnitt. Die "Querbalken" des T liegen jeweils auf Block aneinander, während die Mittelstege des T die ineinandergreifenden Gewindenuten und Gewindestege bilden.

In Fig. 6 sind ein äußerer Stützkörper 20d und ein innerer Stützkörper 22d aus einem Draht gewickelt, dessen Querschnittsform der L-Form gemäß Fig. 1 und 2 entspricht, jedoch mit dem Unterschied, dass die komplementären Gewindenuten und -stege schräge Flanken 38 haben.

Fig. 7 zeigt schließlich einen Teilschnitt eines inneren Stützkörpers 22e, der aus einem Draht mit sechseckigem Querschnitt gebildet wird. Die auf der Innenseite der Schraubenfeder liegenden Ecken sind 90°-Ecken, so dass die Windungen des Drahtes hier eine glatte Innenfläche der Schraubenfeder bilden, während auf der Außenseite im Querschnitt dreieckige Gewindenuten 40 eines Außengewindes gebildet werden. Ein zugehöriger äußerer Stützkörper kann aus einem Draht mit entsprechend angepasster Querschnittsform gewickelt sein. Wahlweise kann der äußere Stützkörper jedoch auch ein herkömmliches Maschinengewinde aufweisen, das zu dem Außengewinde des Stützkörpers 22e komplementär ist.

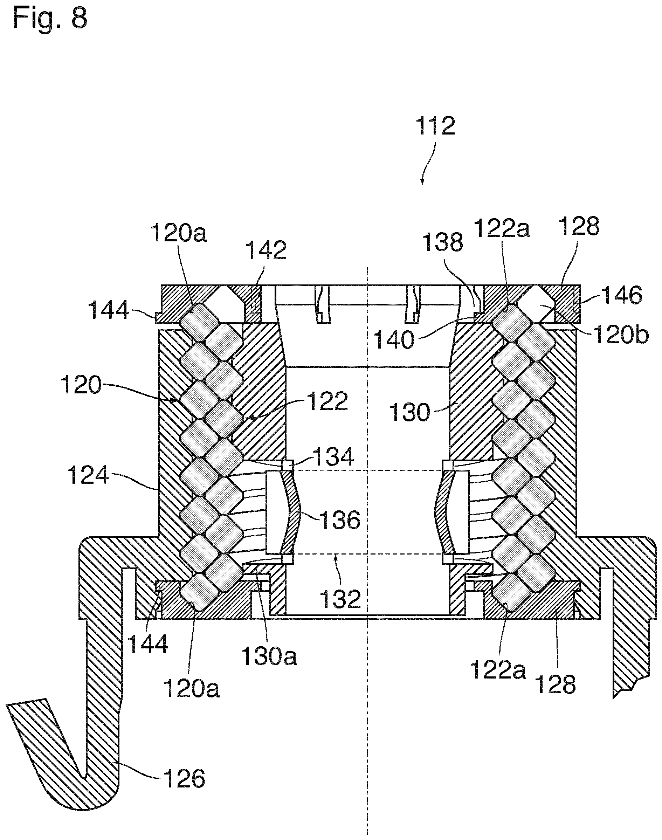

In Fig. 8 bis 10 ist ein Toleranzausgleichselement 112 gemäß einem weiteren Ausführungsbeispiel gezeigt. Die Funktionsweise ist die gleiche wie bei dem Toleranzausgleichselement 12 nach Fig. 1 und 2. Es werden deshalb nur die Einzelheiten näher beschrieben, in denen sich das Toleranzausgleichselement 112 von den Toleranzausgleichselement 12 unterscheidet. Einzelheiten, die in ihrer Funktion den mit Bezug auf Fig. 1 und 2 beschriebenen Einzelheiten entsprechen, sind mit entsprechenden, jeweils um 100 erhöhten Bezugszeichen bezeichnet.

Das Toleranzausgleichselement 112 weist äußere und innere Stützkörper 120, 122 in der Form von Schraubenfedern auf, die aus einem Federstahldraht gewickelt sind. Der Federstahldraht hat in diesem Fall jedoch die Form einer Raute, d. h., eines auf der Spitze stehenden Quadrates, mit leicht abgerundeten oder abgefasten Ecken. Die Windungen des Drahtes liegen wieder auf Block aneinander, so dass sich die Querschnittsquadrate nur mit ihren abgefasten Ecken berühren. Bei dem äußeren Stützkörper 120 bilden die nach innen, zur Achse der Schraubenfeder weisenden Ecken der Quadrate ein Innengewinde (Linksgewinde), während bei dem inneren Stützkörper 122 die nach außen weisenden Ecken der Quadrate ein dazu komplementäres Außengewinde bilden.

Bei dem äußeren Stützkörper 120 bilden außerdem die nach außen weisenden Ecken der Quadrate ein Außengewinde, das in ein dazu komplementäres Innengewinde einer Fassung 124 aus Kunststoff eingeschraubt ist. Die Fassung 124 weist Klauen 126 auf, mit denen sie in einem der zu verbindenden Bauteile (hier nicht gezeigt) verankert werden kann.

Am in Fig. 8 oberen Ende ist der äußere Stützkörper 120 durch eine Endplatte 128 in der Form eines Metallrings abgeschlossen. Die Endplatte 128 ist eine flache, planparallele Platte und weist auf der Seite, die den Stützkörpern 120 und 122 zugewandt ist, zwei ringförmige, konzentrische Nuten 120a und 122a auf, die zu den endständigen Windungen der Stützkörper 120 und 122 komplementär sind. Die Tiefe dieser Nuten nimmt in Umfangsrichtung von einem Maximalwert, der der Ganghöhe der die Stützkörper 120 und 122 bildenden Schraubenfeder entspricht, stetig auf null ab, wobei die Nut an einer Stelle ihres Umfangs eine Unstetigkeitsstelle aufweist, an der die Tiefe von null sprunghaft auf den Maximalwert zunimmt. In Fig. 8 ist die Schnittebene so gelegt, dass sie auf der rechten Seite in Fig. 8 durch diese Unstetigkeitstelle hindurchgeht. Man blickt deshalb auf die Endfläche 120b des Drahtes, der die oberste Windung des Stützkörpers 120 bildet. Auf der linken Seite in Fig. 8 hat die Tiefe der Nut 120a auf die Hälfte des Maximalwertes abgenommen, so dass nur die über die Fassung 124 überstehende Hälfte des Drahtquerschnitts in der Nut 120a aufgenommen wird. Bei der inneren Nut 122a für den inneren Stützkörper 122 variiert die Tiefe auf entsprechende Weise, jedoch liegt die Unstetigkeitsstelle in einer um 180° gedrehten Position, in Fig. 8 also auf der linken Seite. Man blickt hier auf das geschlossene Ende der Nut, da der Draht, der die letzte Windung des Stützkörpers 22 bildet, unmittelbar vor der Schnittebene endet. Auf der rechten Seite in Fig. 8 ist dagegen wieder die Hälfte des Drahtquerschnitts in der Nut 122a aufgenommen.

In Fig. 8 ist außerdem zu erkennen, dass die Nuten 120a und 122a jeweils an den Enden, den sie ihre größte Tiefe aufweisen, die obere Oberfläche der Endplatte 128 durchstoßen. In einem Endabschnitt, der sich über einen Winkelbereich von beispielsweise 15° erstreckt, sind deshalb die Nuten 120a und 122a durch Schlitze mit der oberen Oberfläche der Endplatte 128 verbunden.

Die Endplatte 128 kann z. B. dadurch hergestellt werden, dass die Nuten 120a und 122a in einen scheibenförmigen Rohling geprägt werden, wobei die erwähnten Schlitze entweder vor oder nach dem Prägeschritt freigestellt werden. Auf diese Weise lässt sich eine ebene obere Oberfläche der Endplatte 128 bei minimaler Gesamtdicke der Endplatte 128 erreichen.

Eine zweite Endplatte 128, die den gleichen Aufbau und die gleiche Form wie die oben beschriebene Endplatte hat, ist am in Fig. 8 unteren Ende der Stützkörper 120 und 122 angeordnet, jedoch in umgekehrter Stellung, also mit der die Nuten 120a und 122a enthaltenden Fläche nach oben, und um 90° gedreht, so dass die Schnittebene hier nicht durch die Unstetigkeitsstellen der Nuten 120a und 122a hindurchgeht.

Eine Hülse 130 aus Kunststoff weist in ihrem oberen Endabschnitt ein Außengewinde auf, mit dem sie in ein durch das Drahtprofil des inneren Stützkörpers 122 gebildetes Innengewinde eingeschraubt ist. Im unteren Endbereich weist die Hülse 130 einen Bund 130a auf, mit dem sie sich an der Innenfläche de Stützkörpers 122 abstützt. Wahlweise kann auch anstelle dieses Bundes 130a ein Außengewindeabschnitt vorgesehen sein.

Im mittleren Bereich, zwischen dem oberen Außengewindeabschnitt und dem Bund 130a hat die Hülse 130 einen Abschnitt mit reduziertem Außendurchmesser, auf den ein Federclip 132 aufgeclipst ist. In einer anderen Ausführungsform kann der Federclip auch in einem Stück mit der Hülse ausgebildet sein.

In Fig. 8 geht die Schnittebene durch zwei Fenster 134, die in diametral gegenüberliegenden Positionen in der Umfangswand der Hülse 130 gebildet sind und von konvex nach innen vorspringenden Enden 136 des Federclips 132 durchgriffen werden. Wenn eine Verbindungsschraube, die der Verbindungsschraube 10 in Fig. 1 entspricht, durch das Innere der Hülse 130 gesteckt wird, so legen sich die Enden 136 des Federclips reibschlüssig an den Umfang der Verbindungsschraube an. Hierdurch wird eine Rutschkupplung gebildet, die, wenn die Verbindungsschraube gedreht wird, den Federclip 132 und die Hülse 130 und den damit drehfest verbundenen inneren Stützkörper 122 in Drehrichtung mitnimmt, so dass der innere Stützkörper 122 aus dem äußeren Stützkörper 120 herausgeschraubt wird.

Der axial im Inneren der Hülse 130 gebildete Kanal für die Verbindungsschraube ist am in Fig. 8 oberen Ende konisch erweitert. Die Umfangswand der Hülse bildet hier einen Kranz von Rastklauen 138, die es erlauben, die Endplatte 128 von oben aufzustecken, bis die Rastklauen 128 an einem Bund 140 am inneren Umfangsrand der Endplatte einrasten.

Oberhalb des Bundes 140 ist an der inneren Umfangsfläche der Endplatte 128 an einer Stelle (links in Fig. 8) ein Nocken 142 gebildet, der in eine entsprechende Ausnehmung der Hülse 130 eingreift und dadurch die Endplatte 128 gegen Verdrehung relativ zu der Hülse 130 sichert.

Wenn bei der Vormontage der innere Stützkörper 122 auf den Außengewindeabschnitt der Hülse 130 aufgeschraubt wird, so wird die Aufschraubbewegung begrenzt, wenn das Ende des den Stützkörper 122 bildenden Drahtes am geschlossenen Ende der Nut 122a anstößt. Anschließend kann die Einheit aus Endplatte 128, Hülse 130 und innerem Stützkörper 122 in den äußeren Stützkörper 120 eingeschraubt werden, der seinerseits drehfest in der Fassung 124 gehalten ist. Diese Einschraubbewegung wird dadurch begrenzt, dass das geschlossene Ende der Nut 120a an der Stirnfläche 120b des Drahtes anschlägt, der den äußeren Stützkörper 120 bildet. Auf diese Weise wird ein zu festes Anziehen der Schraubverbindung zwischen den beiden Stützkörpern verhindert und somit sichergestellt, dass der durch die Rutschkupplung bewirkte Reibschluss ausreicht, die Ausschraubbewegung des inneren Stützkörpers 122 einzuleiten.

Die beiden Endplatten 128 weisen am äußeren Umfangsrand einen Bund 144 auf, der bei der in Fig. 8 unteren Endplatte dazu dient, diese in einer entsprechenden Aufnahme der Fassung 124 zu verrasten. An einer Stelle ihres äußeren Umfangs (bei der in Fig. 8 oberen Endplatte auf der rechten Seite) weisen die Endplatten 128 einen weiteren Nocken 146 auf. Dieser Nocken 146 dient bei der Verwendung als untere Endplatte dazu, die Endplatte 128 drehfest in einer entsprechenden Ausnehmung der Fassung 124 zu fixieren. Wenn beim Einschrauben des inneren Stützkörpers 122 in den äußeren Stützkörper 120 ein Drehmoment (im Gegenuhrzeigersinn) auf den äußeren Stützkörper 120 ausgeübt wird, so stützt sich das Ende des Drahtes, der die unterste Windung dieses Stützkörpers bildet, am geschlossenen Ende der Nut 120a in der unteren Endplatte ab.

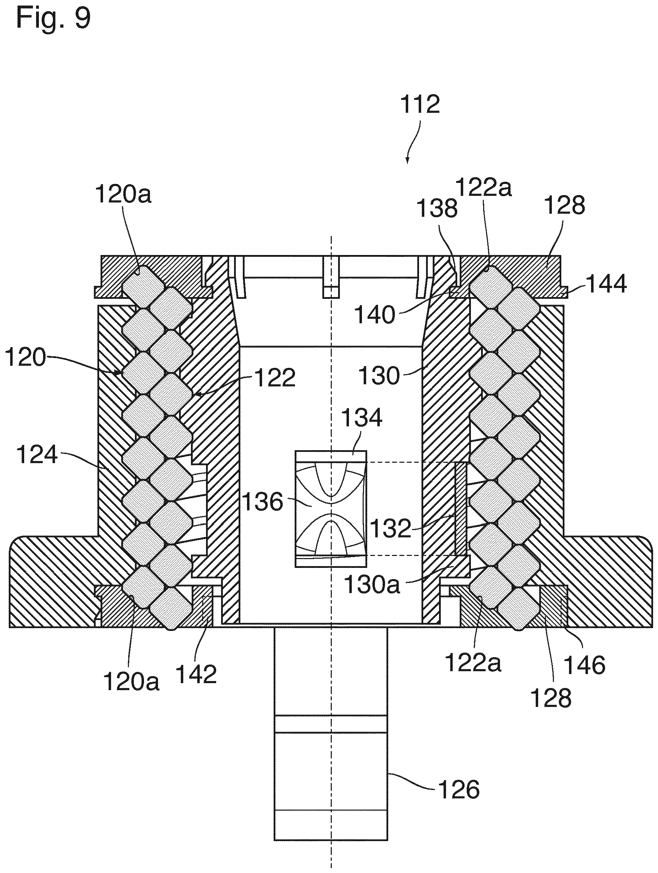

Fig. 9 zeigt das Toleranzausgleichselement 112 nach Fig. 8 in einer um 90° gedrehten Schnittebene. In diesem Fall geht die Schnittebene durch die Nocken 142 und 146 der unteren Endplatte 128. Eines der Fenster 134 sowie eines der Enden 136 des Federclips 132 sind in einer Frontansicht zu sehen, während ein Bügel des Federclips, der den im Durchmesser reduzierten Abschnitt der Hülse 130 C-förmig umgreift, hier im Schnitt zu sehen ist.

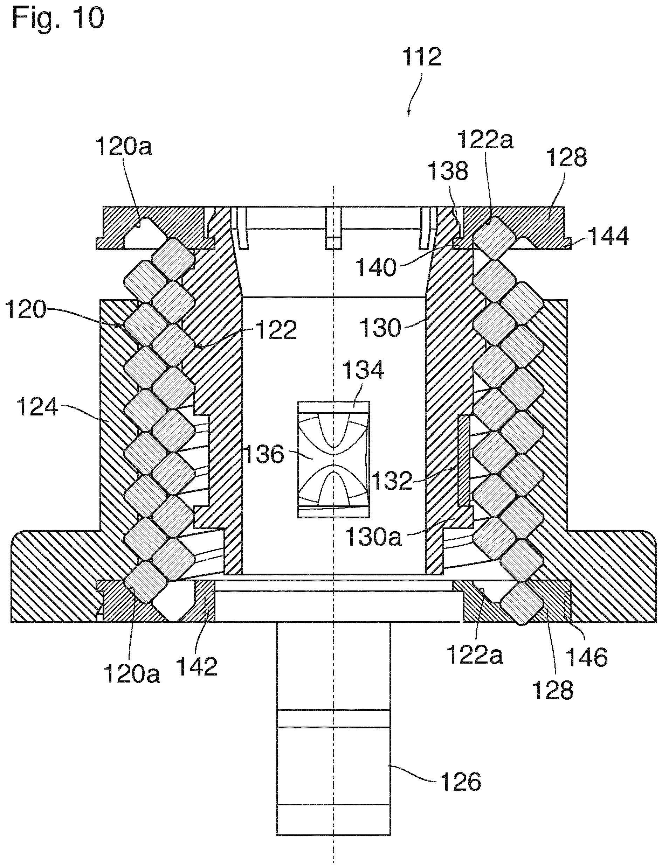

Fig. 10 zeigt einen Schnitt durch das Toleranzausgleichselement 112 in der gleichen Schnittebene wie in Fig. 9, jedoch in einem Zustand, in dem der innere Stützkörper 122 um eine Umdrehung herausgeschraubt wurde.

Da bei dem Toleranzausgleichselement 112 die Schraubenfedern, die hier Stützkörper 120 und 122 bilden, bei bestimmungsgemäßen Gebrauch nur auf Druck belastet werden und außerdem die einzelnen Windungen durch das Innengewinde der Fassung 124 sowie ggf. die Außengewindeabschnitte der Hülse 130 fixiert sind, ist es nicht erforderlich, die einzelnen Windungen der Schraubenfedern miteinander zu verkleben oder zu verschweißen.

## Patentansprüche

1. Toleranzausgleichselement in der Form eines Abstandshalters, der zwischen zwei miteinander verspannbaren Bauteilen (14, 16) anzuordnen ist, mit mindestens zwei Stützkörpern (20, 22), die derart miteinander in Gewindeeingriff stehen, dass das Axialmaß des Toleranzausgleichselements (12) durch relative Verdrehung der Stützkörper (20, 22) verstellbar ist, und mit einer Rutschkupplung und einer durch die Stützkörper (20, 22) hindurchgesteckten Verbindungsschraube (10), wobei einer der Stützkörper über die Rutschkupplung mit der Verbindungsschraube (10) in Eingriff steht, **dadurch gekennzeichnet, dass** beide Stützkörper (20, 22; 120, 122) aus Draht mit nicht rechteckigem Querschnitt gewickelte Schraubenfedern sind, die zueinander komplementäre Innen- und Außengewinde bilden.

2. Toleranzausgleichselement nach Anspruch 1, bei dem mindestens einer der Stützkörper (20) in eine Fassung (24) aus Kunststoff eingebettet ist.

3. Toleranzausgleichselement nach Anspruch 1 oder 2, bei dem mindestens einer der Stützkörper (22) mit einer zu diesem Stützkörper koaxialen Hülse (30) verclipst ist, die die entgegengesetzten Enden der diesen Stützkörper bildenden Schraubenfeder übergreift.

4. Toleranzausgleichselement in der Form eines Abstandshalters, der zwischen zwei miteinander verspannbaren Bauteilen (14, 16) anzuordnen ist, mit mindestens zwei Stützkörpern (120, 122), die derart miteinander in Gewindeeingriff stehen, dass das Axialmaß des Toleranzausgleichselements (112) durch relative Verdrehung der Stützkörper (120, 122) verstellbar ist, und mit einer Rutschkupplung und einer durch die Stützkörper (120, 122) hindurchgesteckten Verbindungsschraube (10), wobei einer der Stützkörper über die Rutschkupplung mit der Verbindungsschraube (10) in Eingriff steht, wobei mindestens einer der Stützkörper (120, 122) eine Schraubenfeder aufweist, die aus einem Draht mit rechteckigem Querschnitt gewickelt ist, **dadurch gekennzeichnet, dass** beide Stützkörper (120, 122) aus Draht mit rechteckigem Querschnitt gewickelt sind und zueinander komplementäre Innen- und Außengewinde bilden, wobei das den Drahtquerschnitt bildende Rechteck jeweils so orientiert ist, dass seine Seiten schräg in Bezug auf die Achse der Schraubenfeder verlaufen.

5. Toleranzausgleichselement nach Anspruch 4, bei dem der Draht, der den mindestens einen Stützkörper (120, 122) bildet, einen quadratischen Querschnitt aufweist, wahlweise mit abgefasten oder abgerundeten Ecken, und so gewickelt ist, dass die Seiten des Quadrats mit der Achse der Schraubenfeder jeweils einen Winkel von 45° bilden.

6. Toleranzausgleichselement nach Anspruch 4 oder 5, bei dem ein äußerer (120) der mindestens zwei Stützkörper (120, 122) durch eine Schraubenfeder gebildet wird, deren Windungen ein Innengewinde sowie ein Außengewinde bilden, und eine den äußeren Stützkörper (120) umgebende Fassung (124) ein Innengewinde aufweist und mit dem Außengewinde dieses Stützkörpers in Gewindeeingriff steht.

7. Toleranzausgleichselement nach einem der Ansprüche 4 bis 6, bei dem ein innerer (122) der mindestens zwei Stützkörper (120, 122) durch eine Schraubenfeder gebildet wird, deren Windungen ein Außengewinde sowie ein Innengewinde bilden, und im Inneren des inneren Stützkörpers eine Hülse (130) angeordnet ist, die ein Außengewinde aufweist und mit dem Innengewinde dieses Stützkörpers (122) in Gewindeeingriff steht.

8. Toleranzausgleichselement nach einem der vorstehenden Ansprüche, bei dem die Windungen der Schraubenfeder im unbelasteten Zustand auf Block aneinanderliegen.

9. Toleranzausgleichselement nach Anspruch 8, bei dem die Windungen der Schraubenfeder an ihren Berührungsflächen miteinander verbunden sind.

10. Toleranzausgleichselement nach Anspruch 3 oder 7, bei dem die Hülse (30, 130) mindestens ein elastisches Element (32; 132) trägt, das radial in das Innere der Hülse vorspringt und die Rutschkupplung bildet.

11. Toleranzausgleichselement nach einem der vorstehenden Ansprüche, bei dem an mindestens einem Ende des durch eine Schraubenfeder gebildeten Stützkörpers (120; 122) eine Endplatte (128) gebildet ist, die eine ringförmige, in Umfangsrichtung in der Tiefe variierende Nut (120a, 122a) zur Aufnahme der letzten Windung der Schraubenfeder aufweist.

12. Toleranzausgleichselement nach Anspruch 11, bei dem ein Ende der ringförmigen Nut (120a, 122a), an dem sich die Tiefe dieser Nut sprunghaft ändert, einen Anschlag für ein Ende des die Schraubenfeder bildenden Drahtes bildet.

13. Toleranzausgleichselement nach den Ansprüchen 11 und 12, bei dem die Endplatte (128) zwei konzentrische Nuten (120a, 122a) zur Aufnahme der letzten Windungen am Ende beider Schraubenfedern aufweist.

14. Toleranzausgleichselement nach einem der Ansprüche 11 bis 13, mit formidentischen Endplatten (128) an beiden Enden des Stützkörpers (120, 122).

15. Toleranzausgleichselement nach den Ansprüchen 6 und 11, bei dem die Endplatte (128) mit der Fassung (124) verrastbar ist.

16. Toleranzausgleichselement nach Anspruch 15, bei dem die Endplatte (128) und die Fassung (124) drehfest aneinander verriegelt sind.

17. Toleranzausgleichselement nach den Ansprüchen 7 und 11, bei dem die Endplatte (128) und die Hülse (130) miteinander verrastbar sind.

18. Toleranzausgleichselement nach Anspruch 17, bei dem die Endplatte (128) und die Hülse (130) drehfest aneinander verriegelt sind.

## Claims

1. A tolerance compensation member in the form of a spacer to be arranged between two components (14, 16) that are adapted to be clamped together, the compensation member having at least two support bodies (20, 22) which are in screw-threaded engagement with one another such that the axial dimension of the tolerance compensation member (12) is adjustable by relative rotation of the support bodies (20, 22), one of the support bodies being in engagement, via a slide coupling, with a connecting bolt (10) that passes through the support bodies (20, 22), **characterized in that** both support bodies (20, 22) are formed by helical springs that are wound from a wire with a non-rectangular cross-section and form internal and external screw-threads complementary to one another.

2. The tolerance compensation member according to claim 1, wherein at least one of the support bodies (20) is embedded in a plastic socket (24).

3. The tolerance compensation member according to claim 1 or 2, wherein at least one of the support bodies (22) is snap-fastened to a sleeve (30) that is arranged co-axially with this support body and embraces the opposite ends of the helical spring forming this support body.

4. A tolerance compensation member in the form of a spacer to be arranged between two components (14, 16) that are adapted to be clamped together, the compensation member having at least two support bodies (120, 122) which are in screw-threaded engagement with one another such that the axial dimension of the tolerance compensation member (12) is adjustable by relative rotation of the support bodies (120, 122), and a slide coupling and a connecting bolt (10) inserted through the support bodies (120, 122), at least one of the support bodies being in engagement with a connecting bolt (10) via the slide coupling, wherein said at least one of the support bodies (120, 122) comprises a helical spring that is wound from a wire with a rectangular cross-section, **characterized in that** both support bodies are wound from wire with a rectangular cross-section and form internal and external screw-threads complementary to one another, the rectangle forming the cross-section of the wire being respectively oriented such that its sides are inclined relative to the axis of the helical spring.

5. The tolerance compensation member according to claim 4, wherein the wire that forms said at least one support body (120, 122) has a square cross-section, optionally with chamfered or rounded corners, and is wound such that the sides of the square form a respective angle of 45° with the axis of the helical spring.

6. The tolerance compensation member according to claim 4 or 5, wherein an outer one (120) of said at least two support bodies (120, 122) is formed by a helical spring the turns of which form both, an internal screw thread and an external screw thread, and a socket (124) that surrounds the outer support body (120) has an internal screw thread in engagement with the external screw thread of this support body.

7. The tolerance compensation member according to any of the claims 4 to 6, wherein an inner one (122) of said at least two support bodies (120, 122) is formed by a helical spring the turns of which form both, an external screw thread and an internal screw thread, and, in the interior of the inner support body, a sleeve (130) is provided that has an external screw thread in engagement with the internal screw thread of this support body (122).

8. The tolerance compensation member according to any of the preceding claims, wherein the turns of the helical spring are in blocking engagement with one another in a non-loaded state of the spring.

9. The tolerance compensation member according to claim 8, wherein the turns of the helical spring are firmly connected to one another at the faces with which they engage each other.

10. The tolerance compensation member according to claim 3 or 7, wherein the sleeve (30; 130) carries at least one elastic member (32; 132) that projects radially into the interior of the sleeve and forms the slide coupling.

11. The tolerance compensation member according to any of the preceding claims, wherein at least one end of the support body (120, 122) that is formed by a helical spring has a terminal plate (128) that forms an annular groove (120, 122a) with a depth that varies in circumferential direction, for accommodating the last turn of the helical spring.

12. The tolerance compensation member according to claim 11, wherein one end of the annular groove (120a, 122a), at which the depth of this groove changes discontinuously, forms an abutment for one end of the wire that forms the helical spring.

13. The tolerance compensation member according to the claims 11 and 12, wherein the terminal plate (128) has two concentric grooves (120a, 122a), for accommodating the respective last turns at the end of both helical springs.

14. The tolerance compensation member according to any of the claims 11 to 13, having terminal plates (128) with identical shapes on both ends of the support bodies (120, 122).

15. The tolerance compensation member according to the claims 6 and 11, wherein the terminal plate (128) is adapted to be snap-fastened at the socket (124).

16. The tolerance compensation member according to claim 15, wherein the terminal plate (128) and the socket (124) are locked against relative rotation.

17. The tolerance compensation member according to claims 7 and 11, wherein the terminal plate (128) and the sleeve (130) are adapted to be snap-fastened to one another.

18. The tolerance compensation member according to claim 17, wherein the terminal plate (128) and the sleeve (130) are locked against relative rotation.

## Revendications

1. Elément de compensation de tolérances ayant la forme d'une entretoise d'écartement, qui est agencé entre deux composants (14, 16) pouvant être serrés l'un avec l'autre, ayant au moins deux corps de support (20, 22) qui sont en prise par filetage l'un avec l'autre, de telle sorte que la dimension axiale de l'élément de compensation de tolérances (12) peut être réglée par une rotation relative des corps de support (20, 22), et ayant un accouplement à friction et une vis d'assemblage (10) passée à travers les corps de support (20, 22), dans lequel l'un des corps de support est en prise avec la vis d'assemblage (10) par l'intermédiaire de l'accouplement à friction, **caractérisé en ce que** les deux corps de support (20, 22 ; 120, 122) sont des ressorts hélicoïdaux enroulés à partir d'un fil ayant une section non rectangulaire et qui forment des filetages intérieur et extérieur complémentaires l'un de l'autre.

2. Elément de compensation de tolérances selon la revendication 1, dans lequel au moins un des corps de support (20) est intégré dans une douille (24) en matière plastique.

3. Elément de compensation de tolérances selon la revendication 1 ou 2, dans lequel au moins un des corps de support (22) est clipsé avec un manchon (30) coaxial à ce corps de support, lequel manchon recouvre les extrémités opposées des ressorts hélicoïdaux formant ces corps de support.

4. Elément de compensation de tolérances ayant la forme d'une entretoise d'écartement, agencé entre deux composants (14, 16) pouvant être serrés l'un avec l'autre, ayant au moins deux corps de support (120, 122) qui sont en prise par filetage l'un avec l'autre, de telle sorte que la dimension axiale de l'élément de compensation de tolérances (112) peut être réglée par une rotation relative des corps de support (120, 122), et ayant un accouplement à friction et une vis d'assemblage (10) passée à travers les corps de support (120, 122), dans lequel l'un des corps de support est en prise avec la vis d'assemblage (10) par l'intermédiaire de l'accouplement à friction, dans lequel au moins un des corps de support (120, 122) comporte un ressort hélicoïdal qui est enroulé à partir d'un fil à section rectangulaire, **caractérisé en ce que** les deux corps de support (120, 122) sont enroulés à partir d'un fil à section rectangulaire et forment des filetages intérieur et extérieur complémentaires l'un de l'autre, dans lequel le rectangle formant la section de fil est respectivement orienté de sorte que ses côtés s'étendent de manière inclinée par rapport à l'axe des ressorts hélicoïdaux.

5. Elément de compensation de tolérances selon la revendication 4, dans lequel le fil qui forme le au moins un corps de support (120, 122), a une section quadratique, au choix avec des coins chanfreinés ou arrondis, et est enroulé de sorte que les côtés du carré forment respectivement un angle de 45° par rapport à l'axe des ressorts hélicoïdaux.

6. Elément de compensation de tolérances selon la revendication 4 ou 5, dans lequel un corps de support extérieur (120) parmi les au moins deux corps de support (120, 122) est formé par un ressort hélicoïdal dont les enroulements forment un filetage intérieur ainsi qu'un filetage extérieur, et une douille (124) entourant le corps de support extérieur (120) comporte un filetage intérieur et est en prise par filetage avec le filetage extérieur de ce corps de support.

7. Elément de compensation de tolérances selon l'une des revendications 4 à 6, dans lequel un corps de support intérieur (122) parmi les au moins deux corps de support (120, 122) est formé par un ressort hélicoïdal dont les enroulements forment un filetage extérieur ainsi qu'un filetage intérieur, et à l'intérieur du corps de support intérieur est agencée un manchon (130) qui comporte un filetage extérieur et qui est en prise par filetage avec le filetage intérieur de ce corps de support (122).

8. Elément de compensation de tolérances selon l'une des revendications précédentes, dans lequel les enroulements du ressort hélicoïdal sont adjacents les uns aux autres et solidaires à l'état non sollicité.

9. Elément de compensation de tolérances selon la revendication 8, dans lequel les enroulements des ressorts hélicoïdaux sont reliés les uns aux autres sur leurs faces de contact.

10. Elément de compensation de tolérances selon la revendication 3 ou 7, dans lequel le manchon (30, 130) supporte au moins un élément élastique (32 ; 132) qui fait radialement saillie à l'intérieur du manchon et forme l'accouplement à friction.

11. Elément de compensation de tolérances selon l'une des revendications précédentes, dans lequel sur au moins une extrémité du corps de support (120 ; 122) formé par un ressort hélicoïdal est formée une plaque d'extrémité (128) qui comporte une gorge annulaire (120a, 122a) dont la profondeur varie dans une direction circonférencielle, de manière à recevoir le dernier enroulement des ressorts hélicoïdaux.

12. Elément de compensation de tolérances selon la revendication 11, dans lequel une extrémité de la gorge annulaire (120a, 122a), sur laquelle la profondeur de cette gorge varie fortement, forme une butée pour une extrémité du fil formant le ressort hélicoïdal.

13. Elément de compensation de tolérances selon les revendications 11 et 12, dans lequel la plaque d'extrémité (128) comporte deux gorges concentriques (120a, 122a) pour recevoir les derniers enroulements à l'extrémité des deux ressorts hélicoïdaux.

14. Elément de compensation de tolérances selon l'une des revendications 11 à 13, ayant des plaques d'extrémité de forme identique (128) aux deux extrémités du corps de support (120, 122).

15. Elément de compensation de tolérances selon les revendications 6 et 11, dans lequel la plaque d'extrémité (128) peut s'encliqueter avec la douille (124).

16. Elément de compensation de tolérances selon la revendication 15, dans lequel la plaque d'extrémité (128) et la douille (124) sont bloquées en rotation l'une par rapport à l'autre.

17. Elément de compensation de tolérances selon les revendications 7 et 11, dans lequel la plaque d'extrémité (128) et le manchon (130) peuvent s'encliqueter l'un avec l'autre.

18. Elément de compensation de tolérances selon la revendication 17, dans lequel la plaque d'extrémité (128) et le manchon (130) sont bloqués en rotation l'un par rapport à l'autre.
